(19) Europäisches Patentamt
European Patent Office
Office européen des brevets

(11) **EP 4 014 214 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **20747386.9**

(22) Anmeldetag: **28.07.2020**

(51) Internationale Patentklassifikation (IPC):
*G08G 1/16* (2006.01)   *G08G 1/0967* (2006.01)
*G08G 1/01* (2006.01)   *B60W 30/18* (2012.01)
*B60W 30/16* (2020.01)   *G08G 1/00* (2006.01)
*G08G 1/095* (2006.01)

(52) Gemeinsame Patentklassifikation (CPC):
**G08G 1/163; G08G 1/0112; G08G 1/0116; G08G 1/0133; G08G 1/0145; G08G 1/096725; G08G 1/096783; G08G 1/096791; G08G 1/164; G08G 1/22;** G08G 1/095

(86) Internationale Anmeldenummer:
**PCT/EP2020/071172**

(87) Internationale Veröffentlichungsnummer:
**WO 2021/028210 (18.02.2021 Gazette 2021/07)**

(54) **VERFAHREN ZUR ERHÖHUNG DER VERKEHRSFLUSSDICHTE AN EINER AMPELKREUZUNG**

METHOD FOR INCREASING THE DENSITY OF TRAFFIC FLOW AT A SIGNAL-CONTROLLED INTERSECTION

PROCÉDÉ POUR AUGMENTER LA DENSITÉ DE FLUX DE CIRCULATION À UNE INTERSECTION À FEUX TRICOLORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2019 DE 102019212263**

(43) Veröffentlichungstag der Anmeldung:
**22.06.2022 Patentblatt 2022/25**

(73) Patentinhaber: **Volkswagen Aktiengesellschaft 38440 Wolfsburg (DE)**

(72) Erfinder:
• **REWALD, Hannes**
  **38100 Braunschweig (DE)**
• **SORGATZ, Stephan**
  **39106 Magdeburg (DE)**
• **KRANKE, Florian**
  **38102 Braunschweig (DE)**

(56) Entgegenhaltungen:
**EP-A1- 1 898 381**   **WO-A1-2018/233175**
**DE-A1-102016 119 265**   **DE-A1-102016 209 330**
**DE-A1-102017 210 252**   **US-A1- 2016 203 719**
**US-A1- 2018 144 635**

## Beschreibung

Die vorliegende Erfindung betrifft ein Verfahren zur Erhöhung der Verkehrsflussdichte an einer Ampelkreuzung mit einer Ampelphase, in der geradeausfahrende Fahrzeuge und linksabbiegende Fahrzeuge gleichzeitig die Ampelkreuzung passieren dürfen, wobei die geradeausfahrenden Fahrzeuge verkehrsregelkonform Vorrang haben und zumindest teilweise ausgestattete Fahrzeuge sind, die eine Car2X-Kommunikation, eine automatische Längsregelung und eine Steuereinheit aufweisen.

Die stetige Entwicklung des autonomen Fahrens und mithin die zunehmende Automatisierung des Straßenverkehrs ermöglicht durch automatisierte Abstimmungsprozesse bei unterschiedlichen Verkehrssituationen eine Erhöhung der Verkehrsflussdichte, also der Anzahl von Fahrzeugen, die pro Zeiteinheit eine bestimmte Stelle passieren. Hierzu sind Kommunikationskanäle, wie beispielsweise Car2X-Kommunikationen bekannt. Aus US 2019/0164420 A1 geht beispielsweise ein Verfahren hervor, das unter Bildung von Fahrzeugkolonnen das Einfädeln von einer Beschleunigungsspur in den fließenden Verkehr vereinfacht, so dass durch weniger Stoppvorgänge sowohl auf der Beschleunigungsspur als auch im fließenden Verkehr eine Erhöhung der Verkehrsflussdichte erzielt werden kann. Das Bilden von Fahrzeugkolonnen führt auch zu Kraftstoffeinsparungen, weil effiziente Abstände automatisch eingehalten und Brems- und Beschleunigungsvorgänge reduziert werden können. Weiterhin beschreibt beispielsweise DE 10 2016 119 265 A1 ein System und Verfahren zur Ermittlung einer Kollisionsgefahr beim Abbiegen eines Fahrzeugs nach links oder rechts an einer Kreuzung. Eine Warnung wird an einen Fahrer des Fahrzeugs herausgegeben, wenn das Fahrzeug sich in einer Kollisionszone mit anderen Fahrzeugen befindet.

Ampelkreuzungen mit einer Ampelphase, in der geradeausfahrende Fahrzeuge und linksabbiegende Fahrzeuge gleichzeitig die Ampelkreuzung passieren dürfen, sind weitere Engstellen im Straßenverkehr, die insbesondere auf der Linksabbiegerspur zu erheblichen Beeinträchtigungen der Verkehrsflussdichte führen. Die linksabbiegenden Fahrzeuge müssen dabei auf ausreichend große Lücken im geradeausfahrenden Gegenverkehr warten, bis sie die Kreuzung passieren können.

Erfahrungsgemäß sind die Dauern der Zeitlücken im Gegenverkehrsstrom statistisch verteilt, wobei sich im Wesentlichen folgende Kategorien festlegen lassen.

Zunächst sind wenige Zeitlücken von weniger als 1 s feststellbar, die mithin kürzer als der Sicherheitsabstand sind, der gemäß der Straßenverkehrsordnung an sich vorgeschrieben ist.

Ein Großteil der Verkehrsteilnehmer hält jedoch einen ausreichenden Sicherheitsabstand und mithin eine Sicherheitszeitlücke von 1 s bis 2 s ein.

Ein nicht unerheblicher Anteil der Verkehrsteilnehmer hält zum vorausfahrenden Fahrzeug jedoch einen Abstand zwischen 2 s und 6,5 s ein, was mithin deutlich größer als der erforderliche Sicherheitsabstand ist, was allerdings auch nicht das Linksabbiegen eines Verkehrsteilnehmers auf der Spur linksabbiegender Fahrzeuge kollisionsfrei erlaubt. Derartige Zeitlücken im Straßenverkehr sind daher als ineffiziente Zeitlücken zu identifizieren.

Lediglich ein Bruchteil der Verkehrsteilnehmer hält eine Grenzzeitlücke zu vorausfahrenden Fahrzeugen ein, die das Linksabbiegen mindestens eines Fahrzeugs kollisionsfrei erlauben.

Die Anzahl von ineffizienten Zeitlücken führt sowohl im Strom der geradeausfahrenden Fahrzeuge als auch im Strom der linksabbiegenden Fahrzeuge zu erheblichen Verzögerungen, womit sich die an sich erreichbare Verkehrsdichte auf beiden Spuren deutlich reduziert. Zudem gehen ineffiziente Zeitlücken zu Lasten des Kraftstoffverbrauchs und den ausgestoßenen Emissionen.

Es ist daher die Aufgabe der vorliegenden Erfindung, ein Verfahren zur Erhöhung der Verkehrsflussdichte und zur Reduktion des Kraftstoffverbrauchs und der Emissionen vorzuschlagen.

Diese Aufgabe wird durch das Verfahren nach Anspruch 1 gelöst, wonach erfindungsgemäß vorgesehen ist, dass zunächst den geradeausfahrenden ausgestatteten Fahrzeugen die Anzahl an wartenden linksabbiegenden Fahrzeugen mittels der Car2X-Kommunikaton übermittelt wird. Anschließend werden die Zeitlücken zwischen den geradeausfahrenden Fahrzeugen in Abhängigkeit der Anzahl von linksabbiegenden Fahrzeugen derart mittels der Steuereinheit und der automatischen Längsregelung eingestellt, dass ein erster Teil der Zeitlücken Sicherheitszeitlücken sind, die jeweils dem erforderlichen Sicherheitsabstand entsprechen und der zweite Teil der Zeitlücken Grenzzeitlücken sind, die das Abbiegen mindestens eines linksfahrenden Fahrzeugs kollisionsfrei erlauben. Weil die ineffizienten Zeitlücken bedarfsgerecht entweder zu Grenzzeitlücken vergrößert oder zu Sicherheitszeitlücken verkleinert werden, wird die Verkehrsflussdichte im Strom der geradeausfahrenden Fahrzeuge bestenfalls vergrößert und im Übrigen allenfalls nur unwesentlich verringert. Die Verkehrsflussdichte im Strom der linksabbiegenden Fahrzeuge kann demgegenüber deutlich erhöht werden, was die Effizienz einer solchen Ampelkreuzung um ein Vielfaches steigert. Bevorzugte Ausführungsformen der vorliegenden Erfindung werden nachfolgend und in den Unteransprüchen angegeben.

Nach einer ersten vorteilhaften Ausführungsform der Erfindung ist vorgesehen, dass ineffiziente Zeitlücken, die länger als die Sicherheitszeitlücken und kürzer als die Grenzzeitlücken sind, durch eine automatische Längsführung der ausgestatteten geradeausfahrenden Fahrzeuge zu Sicherheitszeitlücken verkürzt oder zu Grenzzeitlücken verlängert werden. Dabei können die ausgestatteten Fahrzeuge zur Verkürzung der Zeitlücken beschleunigt oder zur Vergrößerung der Zeitlücken abgebremst werden.

Die Grenzzeitlücken werden vorzugsweise als effiziente Grenzzeitlücken eingestellt die das Abbiegen von einem einzelnen oder mehreren linksabbiegenden Fahrzeugen erlauben. Grenzzeitlücken, die einerseits deutlich zu lang sind, um das Abbiegen eines linksabbiegenden Fahrzeugs kollisionsfrei zu erlauben, und andererseits zu kurz sind, um das Abbiegen zweier linksabbiegender Fahrzeuge kollisionsfrei zu erlauben, werden durch die Längsführung der ausgestatteten Fahrzeuge bedarfsgerecht zu effizienten Grenzzeitlücken verlängert oder verkürzt.

Nach einer weiteren bevorzugten Ausgestaltung der Erfindung ist vorgesehen, dass die geradeausfahrenden Fahrzeuge eine Reihe bilden, deren Länge durch die Einstellung oder Veränderung der internen Zeitlücken zwischen einzelnen Fahrzeugen zu Sicherheitszeitlücken und/oder Grenzzeitlücken nicht oder nur unwesentlich verändert wird. Hierdurch wird die Verkehrsflussdichte auf der Spur der geradeausfahrenden Fahrzeuge nicht beeinflusst und kann im Wesentlichen aufrechterhalten werden.

Erfindungsgemäß bildet die Reihe der geradeausfahrenden Fahrzeuge mehrere Fahrzeugkolonnen, wobei die Zeitlücken zwischen Fahrzeugen einer Fahrzeugkolonne Sicherheitszeitlücken sind, so dass die Grenzzeitlücken zwischen zwei Fahrzeugkolonnen gebildet werden. Dabei ist vorzugsweise vorgesehen, dass die Anzahl von Fahrzeugkolonnen pro Reihe $N_{FK}$ von geradeausfahrenden Fahrzeugen an die Anzahl von linksabbiegenden Fahrzeugen $N_{laF}$ angepasst wird, wobei vorzugsweise für die Anzahl der Fahrzeugkolonnen $N_{FK}$ und die Anzahl $N_{laF}$ an wartenden linksabbiegenden Fahrzeugen gilt:

$$N_{FK} = N_{laF}+1.$$

Sofern aufgrund der vorhandenen Verkehrssituation unverhältnismäßig viele linksabbiegende Fahrzeuge warten, wird allerdings nicht jede Zeitlücke zwischen den ausgestatteten Fahrzeugen zu Grenzzeitlücken erweitert, da die Aufrechterhaltung der Verkehrsflussdichte im Strom der geradeausfahrenden Fahrzeuge Vorrang hat. In einer solchen Situation werden lediglich geeignete ineffiziente Zeitlücken zu Grenzzeitlücken erweitert, so dass sich die Länge der Reihe von geradeausfahrenden Fahrzeugen nicht oder nur unwesentlich verändert.

Weil am Straßenverkehr neben ausgestatteten Fahrzeugen auch nicht ausgestattete Fahrzeuge teilnehmen, die keine Car2X-Kommunikation und keine automatische Längsregelung aufweisen, ist nach einer bevorzugten Ausgestaltung der Erfindung vorgesehen, dass eine Gruppe von mehreren ausgestatteten Fahrzeugen, die einem nicht ausgestatteten Fahrzeug folgen, eine Kolonne bilden. Dabei ist der Kolonnenführer eingerichtet, um den Abstand zwischen dem vorausfahrenden Fahrzeug und dem diesem Fahrzeug vorausfahrenden Fahrzeug zu bestimmen, so dass der Kolonnenführer bedarfsabhängig eine Sicherheitslücke oder eine Grenzzeitlücke zum vorausfahrenden Fahrzeug einstellt. Mit anderen Worten, der Kolonnenführer ist eingerichtet, um den Abstand von zumindest zwei vorausfahrenden Fahrzeugen zu bestimmen. Sollte der Abstand zwischen den beiden vorausfahrenden Fahrzeugen keiner Grenzzeitlücke entsprechen, wird das als Kolonnenführer definierte ausgestattete Fahrzeug im Bedarfsfall eine Grenzzeitlücke zum unmittelbar vorausfahrenden Fahrzeug einstellen.

Vorzugsweise ist vorgesehen, dass die Ampelkreuzung ebenfalls mit einer Car2X-Kommunikation ausgestattet ist, so dass die Ampelkreuzung den geradeausfahrenden Fahrzeugen die Anzahl von linksabbiegenden Fahrzeugen mitteilen kann. Insbesondere sind Sensorvorrichtungen vorgesehen, mit denen die Ampelkreuzung auch feststellen kann, ob nicht ausgestattete Fahrzeuge als linksabbiegende Fahrzeuge warten, so dass auch für diese Fahrzeuge entsprechende Grenzzeitlücken im Strom der geradeausfahrenden Fahrzeuge eingestellt werden.

Die Zuordnung der geradeausfahrenden Fahrzeuge zu Kolonnen wird vorzugsweise vor der Querung der Ampelkreuzung durchgeführt und die Zuordnung der Fahrzeuge zu Kolonnen wird nach der Querung der Ampelkreuzung aufgelöst. Mithin ergibt sich lediglich eine temporäre Zuordnung der Fahrzeuge zu Kolonnen und die automatische Längsführung greift nur bei der Annäherung an eine Ampelkreuzung und beim Überfahren derselben ein. Abseits hiervon wird die Längsregelung der Fahrzeuge auf andere Weise gesteuert, wie beispielsweise durch die Fahrer der Fahrzeuge selbst.

Bei Ampelkreuzungen mit zwei oder mehr Spuren für geradeausfahrende Fahrzeuge ist vorzugsweise eine laterale - also eine seitliche - Synchronisation der Fahrzeuge, insbesondere der Fahrzeugkolonnen vorgesehen, so dass die Grenzzeitlücken parallel zueinander oder um einen Versatz $\Delta T$ zueinander versetzt angeordnet sind, was das Abbiegen mindestens eines linksabbiegenden Fahrzeugs bei vier oder mehrspurigen Ampelkreuzungen kollisionsfrei erlaubt. Auch die laterale Synchronisation wird vor der Querung der Ampelkreuzung durchgeführt und nach der Querung der Ampelkreuzung aufgelöst.

Konkrete Ausführungsformen der vorliegenden Erfindung werden nachfolgend mit Bezug auf die Figuren erläutert. Es zeigen:

Fig. 1    eine zweispurige Ampelkreuzung mit einer Reihe von geradeausfahrenden Fahrzeugen und zwei linksabbiegenden Fahrzeugen mit Zeitlücken gemäß dem Stand der Technik,

Fig. 2a, b    jeweils eine zweispurige Ampelkreuzung mit zwei Kolonnen von geradeausfahrenden Fahrzeugen und zwei linksabbiegenden Fahrzeugen,

Fig. 3    eine vierspurige Ampelkreuzung mit zwei Reihen von geradeausfahrenden Fahrzeugen und zwei linksabbiegenden Fahrzeugen mit Zeitlücken gemäß dem Stand der Technik,

Fig. 4a,b,c    jeweils eine vierspurige Ampelkreuzung mit vier lateral synchronisierten Kolonnen und zwei linksabbiegenden Fahrzeugen und

Fig. 5a,b    jeweils eine zweispurige Ampelkreuzung mit einer Reihe mit geradeausfahrenden ausgestatteten Fahrzeugen und einem nichtausgestatteten Fahrzeug.

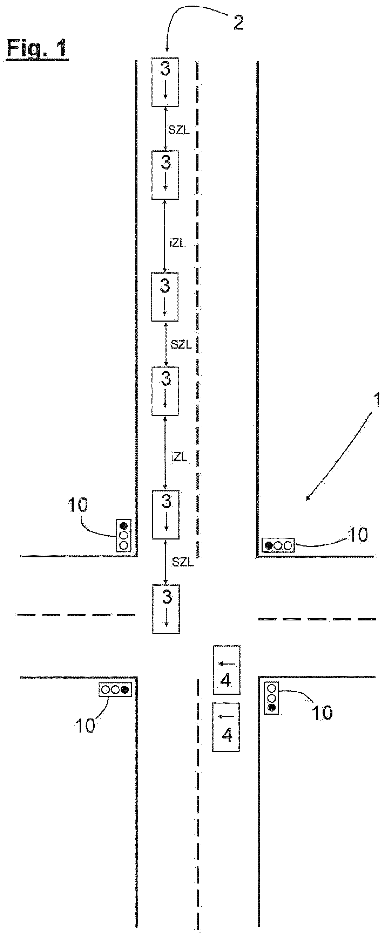

Die nach dem Stand der Technik bekannte Ausgangslage an Ampelkreuzungen ist in Fig. 1 dargestellt. Die Ampelkreuzung 1 einer zweispurigen Straße weist mehrere Ampeln 10 auf und wird von einer Reihe 2 von geradeausfahrenden Fahrzeugen 3 überfahren, wobei zwischen den Fahrzeugen 3 unterschiedliche Zeitlücken sind. Überwiegend liegen vergleichsweise kurze Abstände und mithin Sicherheitszeitlücken SZL vor. In zwei Fällen liegen zwischen den Fahrzeugen 3 jedoch ineffiziente Abstände vor, woraus sich ineffiziente Zeitlücken iZL ergeben, die das kollisionsfreie Abbiegen eines linksabbiegenden Fahrzeugs blockieren und die Reihe 2 an geradeausfahrenden Fahrzeugen 3 ohne ersichtlichen Grund verlängern. Die linksabbiegenden Fahrzeuge 4 müssen in der dargestellten Situation abwarten, bis die Reihe 2 der geradeausfahrenden Fahrzeuge 3 die Ampelkreuzung 1 passiert hat, was die Verkehrsflussdichte bei den linksabbiegenden Fahrzeugen 4 verringert.

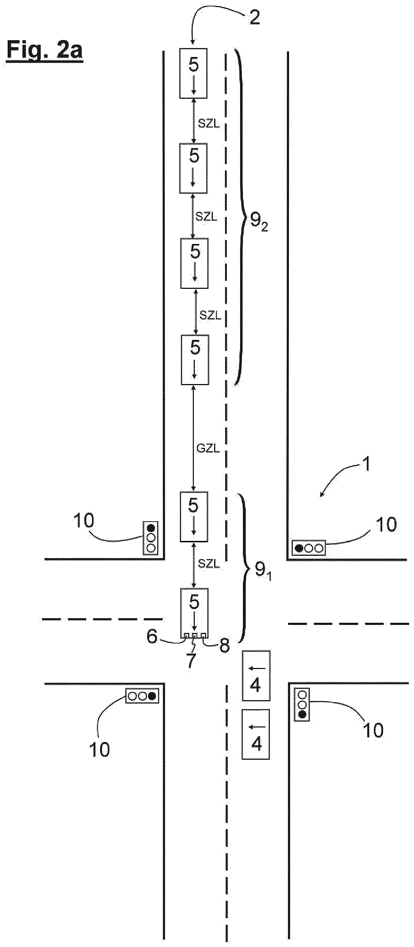

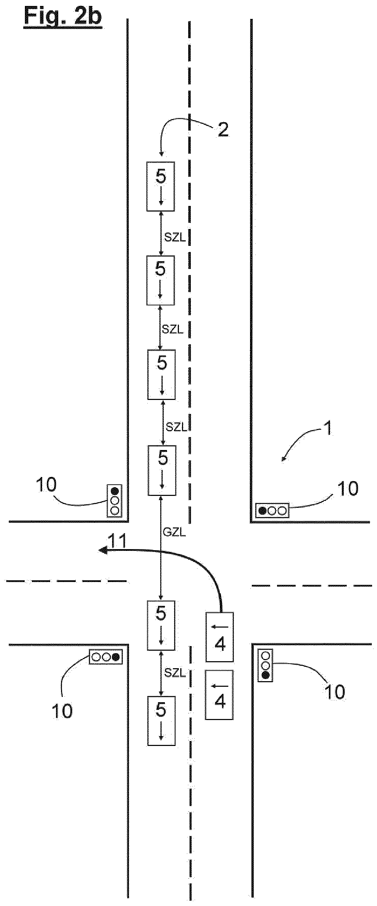

Die Fig. 2a,b zeigen den erfindungsgemäßen Verfahrensablauf an der Ampelkreuzung 1 der zweispurigen Straße. Die Ampelkreuzung 1 wird von einer Reihe 2 ausgestatteter Fahrzeuge 5 überquert, die eine Car2X-Kommunikation 6, eine Steuereinheit 7 und eine automatische Längsregelung 8 aufweisen (nur in Fig. 2a exemplarisch an einem Fahrzeug 5 dargestellt). Den ausgestatteten Fahrzeugen 5 in der Reihe 2 wird über eine Car2X-Kommunikation 6 die Anzahl $N_{laF}$ an wartenden linksabbiegenden Fahrzeugen 4 übermittelt. Die Car2X-Kommunikation 6 kann dabei durch geeignete Kommunikationseinrichtungen der Ampelkreuzung 1 oder der linksabbiegenden Fahrzeuge 4 erfolgen, sofern diese Fahrzeuge ausgestattete Fahrzeuge sind oder zumindest eine Car2X-Kommunikation aufweisen. Anschließend werden die ineffizienten Zeitlücken iZL innerhalb der Reihe 2 an geradeausfahrenden Fahrzeugen 5 identifiziert und lokalisiert. In Abhängigkeit der Anzahl $N_{laF}$ von linksabbiegenden Fahrzeugen 4 werden anschließend Kolonnen 9 gebildet und die Zeitlücken zwischen Fahrzeugen einer Kolonne 9 mittels der automatischen Längsregelung auf jeweils eine Sicherheitszeitlücke SZL einstellt. Im dargestellten Ausführungsbeispiel haben sich zwei Kolonnen $9_1$, $9_2$ gebildet. Zwischen den Kolonnen $9_1$, $9_2$ wird eine Grenzzeitlücke GZL eingestellt, die das Linksabbiegen eines Fahrzeugs 4 in Pfeilrichtung 11 kollisionsfrei erlaubt, sobald die Grenzzeitlücke GZL auf Höhe der Ampelkreuzung 1 ist (Fig. 2b). Hierbei wird die Länge der Reihe 2 von geradeausfahrenden Fahrzeugen 5 nicht vergrößert, womit die Verkehrsflussdichte der geradeausfahrenden Fahrzeuge 5 aufrechterhalten und die Verkehrsflussdichte der linksabbiegenden Fahrzeuge 4 erhöht werden kann.

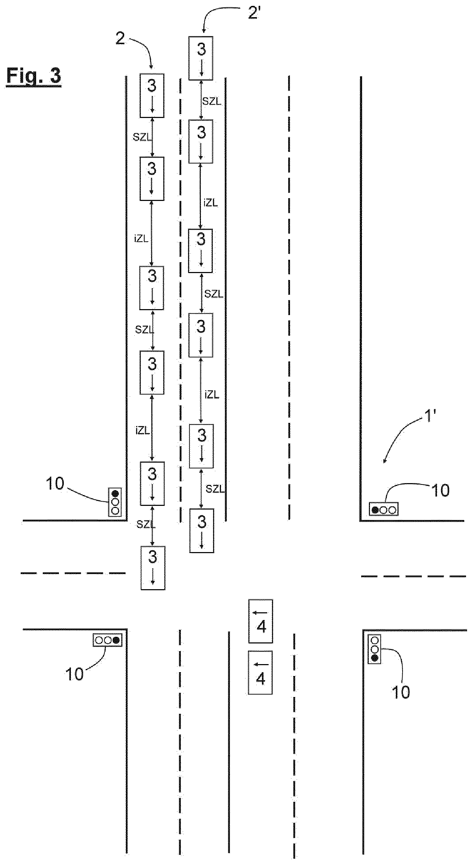

Fig. 3 zeigt analog zu Fig. 1 die Verkehrssituation nach dem Stand der Technik bei einer Ampelkreuzung 1' einer vierspurigen Straße. Dargestellt sind zwei parallele Reihen 2, 2' von geradeausfahrenden Fahrzeugen 3, die die Ampelkreuzung 1' überqueren wollen. Aufgrund der unregelmäßigen Abstände und Zeitlücken zwischen den einzelnen Fahrzeugen 3 ist ein Linksabbiegen der beiden linksabbiegenden Fahrzeuge 4 nicht kollisionsfrei möglich. Die linksabbiegenden Fahrzeuge müssen daher Vorrang gewähren und abwarten, bis beide Reihen 2, 2' die Ampelkreuzung 1' vollständig überquert haben.

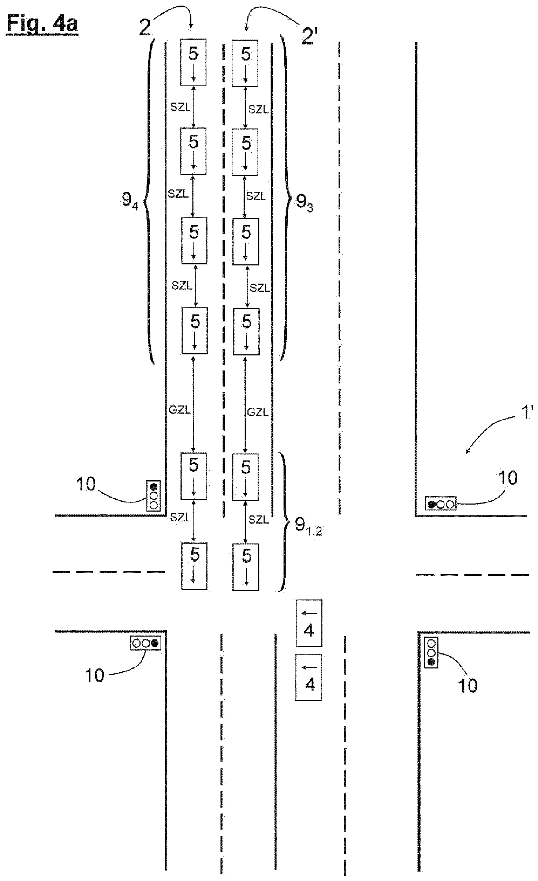

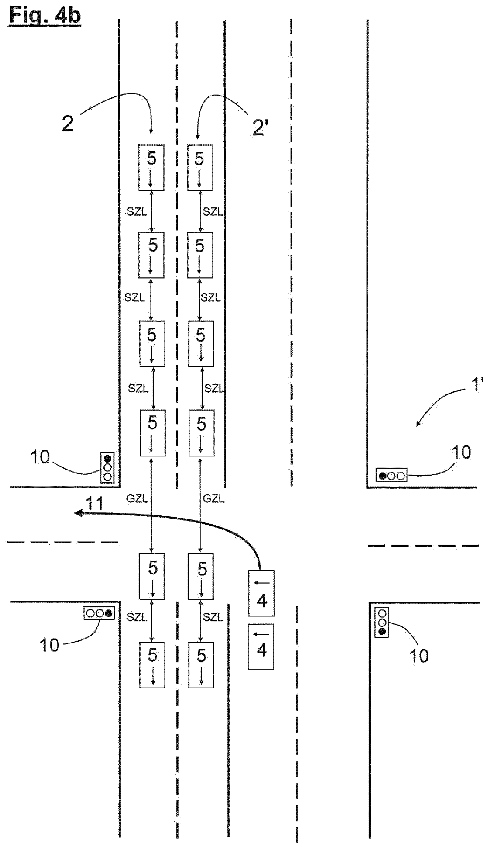

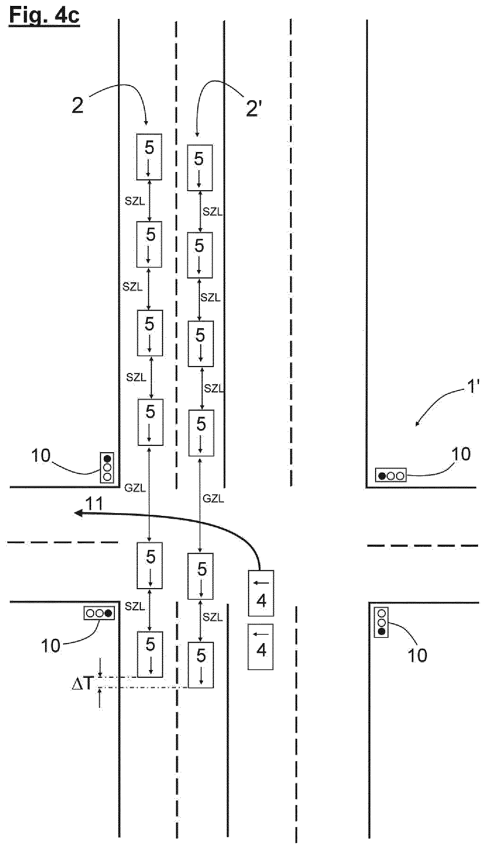

Die Fig. 4a, b, c zeigen den Verfahrensablauf des erfindungsgemäßen Verfahrens, wonach die beiden Reihen 2, 2' an geradeausfahrenden ausgestatteten Fahrzeugen 5 zunächst Kolonnen $9_1$, $9_2$, $9_3$, $9_4$ bilden und zwischen den Kolonnen $9_1$, $9_2$, $9_3$, $9_4$ Grenzzeitlücken GZL eingestellt werden. Hinzu kommt, dass sich die beiden Reihen 2, 2' lateral synchronisieren, so dass die Fahrzeuge 5 und insbesondere die Grenzzeitlücken GZL auf gleicher Höhe (Fig. 4a, b) oder leicht zueinander versetzt (Fig. 4c) sind, was das Linksabbiegen eines linksabbiegenden Fahrzeugs 4 in Pfeilrichtung 11 kollisionsfrei erlaubt (Fig. 4b). Der geringfügige Versatz ΔT zwischen den Reihen 2, 2' nach Fig. 4c trägt der Tatsache Rechnung, dass sich die (linke) Reihe 2 bereits in Fahrtrichtung fortbewegt hat, während das linksabbiegende Fahrzeug 4 durch die Grenzzeitlücke GZL der Reihe 2' fährt. Insofern begünstigt ein solcher Versatz ΔT der lateral synchronisierten Reihen 2, 2' das kollisionsfreie Abbiegen und erlaubt darüber hinaus das kollisionsfreie Abbiegen von deutlich mehr als zwei Reihen von geradeausfahrenden Fahrzeugen 5.

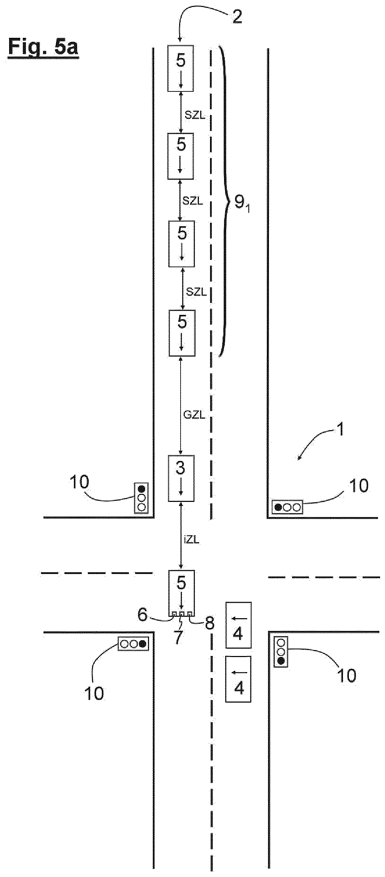

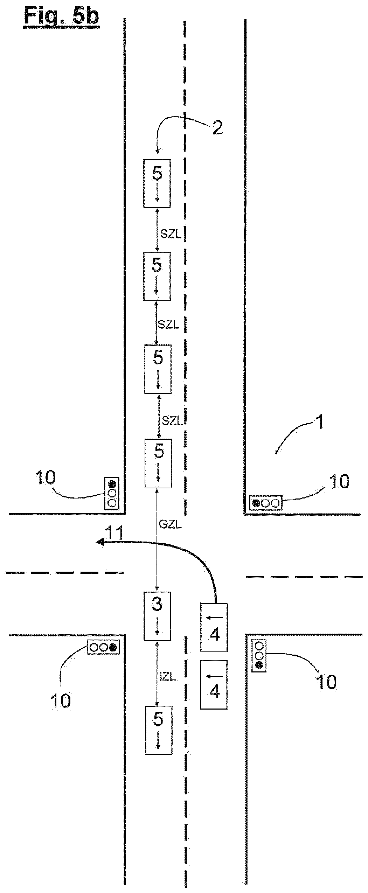

Die Fig. 5a, b zeigen den Fall, bei dem in der Reihe 2 von geradeausfahrenden Fahrzeugen neben ausgestatteten Fahrzeugen 5 auch mindestens ein nichtausgestattetes Fahrzeug 3 vorhanden ist. Die dem nichtausgestatteten Fahrzeug 3 folgenden ausgestatteten Fahrzeuge 5 werden als Kolonne 9, mit Sicherheitszeitlücken SZL zwischen den Fahrzeugen 5 definiert und der Kolonnenführer hält aufgrund der wartenden linksabbiegenden Fahrzeuge 4 eine Grenzzeitlücke GZL ein, die das Linksabbiegen eines Fahrzeugs 4 kollisionsfrei erlaubt (Fig. 5b).

Die vorliegende Beschreibung gilt für den Rechtsverkehr. Im Linksverkehr sind die angesprochenen Fahrtrichtungen den entsprechenden Regelungen der einschlägigen Straßenverkehrsordnung anzupassen.

## Bezugszeichenliste

| | |
|---|---|
| 1, 1' | Ampelkreuzung |
| 2, 2' | Reihe |
| 3 | geradeausfahrende Fahrzeuge |
| 4 | linksabbiegende Fahrzeuge |
| 5 | geradeausfahrende ausgestattete Fahrzeuge |
| 6 | Car2X-Kommunikation |
| 7 | Steuereinheit |
| 8 | automatische Längsregelung |
| $9_{1,...,4}$ | Kolonnen |
| 10 | Ampel |
| 11 | Pfeilrichtung |
| $N_{FK}$ | Anzahl der Kolonnen |
| $N_{laF}$ | Anzahl der linksabbiegenden Fahrzeuge |
| SZL | Sicherheitszeitlücken iZL ineffiziente Zeitlücken |
| GZL | Grenzzeitlücken |
| $\Delta T$ | Versatz |

## Patentansprüche

1. Verfahren zur Erhöhung der Verkehrsflussdichte an einer Ampelkreuzung (1,1') mit einer Ampelphase, in der geradeausfahrende Fahrzeuge und entgegenkommende linksabbiegende Fahrzeuge gleichzeitig die Ampelkreuzung passieren dürfen, wobei die geradeausfahrenden Fahrzeuge verkehrsregelkonform Vorrang haben und ausgestattete Fahrzeuge (5) sind, die eine Car2X-Kommunikation (6), eine automatische Längsregelung (7) und eine Steuereinheit (8) aufweisen,
**dadurch gekennzeichnet, dass**

- den geradeausfahrenden ausgestatteten Fahrzeugen (5) die Anzahl an wartenden linksabbiegenden Fahrzeugen $N_{laF}$ mittels der Car2X-Kommunikation (6) übermittelt wird;
- Zeitlücken zwischen den geradeausfahrenden ausgestatteten Fahrzeugen (5) in Abhängigkeit der Anzahl von linksabbiegenden Fahrzeugen (4) derart mittels der Steuereinheit (8) und der automatischen Längsregelung (7) eingestellt werden, dass ein erster Teil der Zeitlücken Sicherheitszeitlücken (SZL) zu dem vorausfahrenden geradeausfahrenden ausgestatteten Fahrzeug sind, die jeweils dem erforderlichen Sicherheitsabstand entsprechen, und ein zweiter Teil der Zeitlücken Grenzzeitlücken (GZL) sind, die das Abbiegen mindestens eines linksabbiegenden Fahrzeugs (4) kollisionsfrei erlauben; und die geradeausfahrenden Fahrzeuge eine Reihe von mehreren Fahrzeugkolonnen bilden, wobei die Zeitlücken zwischen den Fahrzeugen einer Fahrzeugkolonne Sicherheitszeitlücken sind, so dass die Grenzzeitlücken zwischen zwei Fahrzeugkolonnen gebildet werden.

2. Verfahren nach Anspruch 1, **dadurch gekennzeichnet, dass** ineffiziente Zeitlücken (iZL), die länger als die Sicherheitszeitlücken (SZL) und kürzer als die Grenzzeitlücken (GZL) sind, durch eine automatische Längsführung der ausgestatteten geradeausfahrenden Fahrzeuge (5) zu Sicherheitszeitlücken (SZL) verkürzt oder zu Grenzzeitlücken (GZL) verlängert werden.

3. Verfahren nach einem der Ansprüche 1 oder 2, **dadurch gekennzeichnet, dass** die Grenzzeitlücken (GZL) als effiziente Grenzzeitlücken eigestellt werden, die das Abbiegen von einem einzelnen linksabbiegenden Fahrzeug oder von mehreren linksabbiegenden Fahrzeugen erlauben.

4. Verfahren nach einem der Ansprüche 1 oder 3, **dadurch gekennzeichnet, dass** die Länge der Reihe (2, 2') durch die Einstellung oder Veränderung der reiheninternen Zeitlücken zwischen einzelnen Fahrzeugen als Sicherheitszeitlücken (SZL) und/oder Grenzzeitlücken (GZL) nicht oder nur unwesentlich verändert wird.

5. Verfahren nach einem der Ansprüche 1 bis 4, **dadurch gekennzeichnet, dass** die Anzahl von Fahrzeugkolonnen $N_{FK}$ pro Reihe (2, 2') von geradeausfahrenden Fahrzeugen (5) an die Anzahl von linksabbiegenden Fahrzeugen (4) angepasst wird, wobei vorzugsweise für die Anzahl der Fahrzeugkolonnen $N_{FK}$ und die Anzahl an wartenden linksabbiegenden Fahrzeuge (4) $N_{laF}$ gilt: $N_{FK} = N_{laF} + 1$.

6. Verfahren nach einem der Ansprüche 1 bis 5, **dadurch gekennzeichnet, dass** eine Gruppe von mehreren ausgestatteten Fahrzeugen (5), die einem nicht ausgestatteten Fahrzeug (3) folgen, eine Kolonne (9) bilden, wobei der Kolonnenführer eingerichtet ist, um den Abstand zwischen dem vorausfahrenden Fahrzeug (3) und dem diesem Fahrzeug vorausfahrenden Fahrzeug (3, 5) zu bestimmen, so dass der Kolonnenführer bedarfsabhängig eine Sicherheitszeitlücke (SZL) oder eine Grenzzeitlücke (GZL) zum vorausfahrenden Fahrzeug (3) einstellt.

7. Verfahren nach einem der Ansprüche 1 bis 6, **dadurch gekennzeichnet, dass** die Ampelkreuzung (1, 1') mit einer Car2X-Kommunikation ausgestattet ist.

8. Verfahren nach einem der Ansprüche 1 bis 7, **dadurch gekennzeichnet, dass** die Zuordnung der geradeausfahrenden Fahrzeuge (5) zu Kolonnen (9) vor der Querung der Ampelkreuzung (1, 1') durchgeführt wird und die Zuordnung der Fahrzeuge (5) zu Kolonnen (9) nach der Querung der Ampelkreuzung (1, 1') aufgelöst wird.

9. Verfahren nach einem der Ansprüche 1 bis 8, **dadurch gekennzeichnet, dass** bei Ampelkreuzungen (1') mit zwei oder mehr Spuren für geradeausfahrende Fahrzeuge (5) eine laterale Synchronisation der Fahrzeuge (5), insbesondere der Fahrzeugkolonnen (9) erfolgt, so dass Grenzzeitlücken (GZL) parallel zueinander oder um einen Versatz ($\Delta T$) zueinander versetzt angeordnet sind, was das Abbiegen mindestens eines linksfahrenden Fahrzeugs (4) bei zwei- oder mehrspurigen Ampelkreuzungen (1') kollisionsfrei erlaubt.

**Claims**

1. Method for increasing the traffic flow density at a traffic light crossing (1,1') having a traffic light phase, in which vehicles driving straight ahead and oncoming left-turning vehicles may pass through the traffic light crossing at the same time, the vehicles driving straight ahead having priority, in accordance with traffic regulations, and being equipped vehicles (5) which have Car2X communication (6), an automatic longitudinal control system (7) and a control unit (8), **characterized in that**

   - the number of waiting left-turning vehicles $N_{laF}$ is transmitted to the equipped vehicles driving straight ahead (5) by means of the Car2X communication (6), and
   - intervals between the equipped vehicles driving straight ahead (5) are set on the basis of the number of left-turning vehicles (4) by means of the control unit (8) and the automatic longitudinal control system (7) in such a way that a first portion of the intervals are safety intervals (SZL) to the preceding equipped vehicle driving straight ahead, each of which corresponds to the required safety distance, and a second portion of the intervals are critical intervals (GZL), which allow at least one left-turning vehicle (4) to turn without a collision; and the vehicles driving straight ahead form a line of a plurality of vehicle convoys, the intervals between the vehicles of a vehicle convoys being safety intervals, so that the critical intervals are formed between two vehicle convoys.

2. Method according to claim 1, **characterized in that** inefficient intervals (iZL), which are longer than the safety intervals (SZL) and shorter than the critical intervals (GZL), are shortened to safety intervals (SZL) or extended to critical intervals (GZL) by automatic longitudinal guidance of the equipped vehicles driving straight-ahead (5).

3. Method according to either claim 1 or claim 2, **characterized in that** the critical intervals (GZL) are set as efficient critical intervals that allow a single left-turning vehicle or a plurality of left-turning vehicles to turn.

4. Method according to either claim 1 or claim 3, **characterized in that** the length of the line (2, 2') is not changed or is changed only insignificantly by setting or changing the line-internal intervals between individual vehicles as safety intervals (SZL) and/or critical intervals (GZL).

5. Method according to any of claims 1 to 4, **characterized in that** the number of vehicle convoys $N_{FK}$ per line (2, 2') of vehicles driving straight ahead (5) is adapted to the number of left-turning vehicles (4), wherein, for the number of vehicle convoys $N_{FK}$ and the number of waiting left-turning vehicles (4) $N_{laF}$, preferably $N_{FK} = N_{laF} + 1$.

6. Method according to any of claims 1 to 5, **characterized in that** a group of a plurality of equipped vehicles (5) following a non-equipped vehicle (3) form a convoy (9), the convoy leader being configured to determine the distance between the preceding vehicle (3) and the vehicle (3, 5) preceding that vehicle, so that the convoy leader adjusts a safety interval (SZL) or a critical interval (GZL) to the preceding vehicle (3) as required.

7. Method according to any of claims 1 to 6, **characterized in that** the traffic light crossing (1, 1') is equipped with Car2X communication.

8. Method according to any of claims 1 to 7, **characterized in that** the assignment of the vehicles driving straight ahead (5) to convoys (9) is carried out before crossing the traffic light crossing (1, 1') and the assignment of the vehicles (5) to convoys (9) is ended after crossing the traffic light crossing (1, 1').

9. Method according to any of claims 1 to 8, **characterized in that**, in the case of traffic light crossings (1') having two or more lanes for vehicles driving straight ahead (5), a lateral synchronization of the vehicles (5), in particular of the vehicle convoys (9), takes place, so that critical intervals (GZL) are arranged parallel to one another or are offset by an offset ($\Delta T$), which allows at least one left-turning vehicle (4) to turn without a collision in the case of two-lane or multilane traffic light crossings (1').

**Revendications**

1. Procédé d'augmentation de la densité de flux de trafic au niveau d'un croisement avec feux de signalisation (1,1') comportant une phase de feux de signalisation, dans laquelle des véhicules allant tout droit et des véhicules tournant à gauche en sens inverse sont autorisés à franchir en même temps le croisement avec feux de signalisation, dans lequel les véhicules allant tout droit ont la priorité conformément aux règles de circulation et sont des véhicules (5) équipés, qui présentent une communication Car2X (6), une régulation longitudinale automatique (7) et une unité de commande (8), **caractérisé en ce que**

- le nombre de véhicules tournant à gauche en attente $N_{laF}$ est transmis aux véhicules (5) équipés allant tout droit au moyen de la communication Car2X (6) ;
- des intervalles de temps entre les véhicules (5) équipés allant tout droit sont réglés en fonction du nombre de véhicules tournant à gauche (4) au moyen de l'unité de commande (8) et de la régulation longitudinale automatique (7), de telle sorte qu'une première partie des intervalles de temps sont des intervalles de temps de sécurité (SZL) pour les véhicules équipés allant tout droit qui précèdent, qui correspondent respectivement à la distance de sécurité requise, et une seconde partie des intervalles de temps sont des intervalles de temps limites (GZL) qui permettent à au moins un véhicule tournant à gauche (4) de tourner sans collision ; et les véhicules allant tout droit forment une rangée de plusieurs colonnes de véhicules, dans lequel les intervalles de temps entre les véhicules d'une colonne de véhicules sont des intervalles de temps de sécurité, de sorte que les intervalles de temps limites sont formés entre deux colonnes de véhicules.

2. Procédé selon la revendication 1, **caractérisé en ce que** des intervalles de temps inefficaces (iZL), qui sont plus longs que les intervalles de temps de sécurité (SZL) et plus courts que les intervalles de temps limites (GZL), sont raccourcis à des intervalles de temps de sécurité (SZL) ou prolongés à des intervalles de temps limites (GZL) par un guidage longitudinal automatique des véhicules (5) équipés allant tout droit.

3. Procédé selon l'une des revendications 1 ou 2, **caractérisé en ce que** les intervalles de temps limites (GZL) sont réglés comme intervalles de temps limites efficaces, qui permettent à un véhicule tournant à gauche individuel ou à plusieurs véhicules tournant à gauche de tourner.

4. Procédé selon l'une des revendications 1 ou 3, **caractérisé en ce que** la longueur de la rangée (2, 2') n'est pas modifiée ou n'est que légèrement modifiée par le réglage ou la modification des intervalles de temps internes à la rangée entre des véhicules individuels en tant qu'intervalles de temps de sécurité (SZL) et/ou intervalles de temps limites (GZL).

5. Procédé selon l'une des revendications 1 à 4, **caractérisé en ce que** le nombre de colonnes de véhicules $N_{FK}$ par rangée (2, 2') de véhicules (5) allant tout droit est adapté au nombre de véhicules tournant à gauche (4), dans lequel de préférence, pour le nombre de colonnes de véhicules $N_{FK}$ et le nombre de véhicules tournant à gauche (4) en attente $N_{laF}$, ce qui suit est valable : $N_{FK} = N_{laF} + 1$.

6. Procédé selon l'une des revendications 1 à 5, **caractérisé en ce qu'**un groupe de multiples véhicules (5) équipés qui suivent un véhicule (3) non équipé forment une colonne (9), dans lequel le guide de colonne est configuré pour déterminer la distance entre le véhicule (3) qui précède et le véhicule (3, 5) qui précède ledit véhicule, de sorte que le guide de colonne règle selon les besoins un intervalle de temps de sécurité (SZL) ou un intervalle de temps limite (GZL) par rapport au véhicule (3) qui précède.

7. Procédé selon l'une des revendications 1 à 6, **caractérisé en ce que** le croisement avec feux de signalisation (1, 1') est équipé d'une communication Car2X.

8. Procédé selon l'une des revendications 1 à 7, **caractérisé en ce que** l'agencement des véhicules (5) allant tout droit en colonnes (9) est mis en oeuvre avant la traversée du croisement avec feux de signalisation (1, 1') et l'agencement des véhicules (5) en colonnes (9) est dissout après la traversée du croisement avec feux de signalisation (1, 1').

9. Procédé selon l'une des revendications 1 à 8, **caractérisé en ce que**, dans des croisements avec feux de signalisation (1') avec deux voies ou plus, pour des véhicules (5) allant tout droit, une synchronisation latérale des véhicules (5), en particulier des colonnes de véhicules (9), se produit, de sorte que les intervalles de temps limites (GZL) sont disposés parallèlement les uns aux autres ou de manière décalée les uns des autres d'un décalage ($\Delta T$), ce qui permet à au moins un véhicule tournant à gauche (4) dans des croisements avec feux de signalisation (1') à deux voies ou plus de tourner sans collision.

**Fig. 1**

Fig. 2a

# Fig. 2b

**Fig. 3**

## Fig. 4a

## Fig. 4b

## Fig. 4c

**Fig. 5a**

## Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190164420 A1

- DE 102016119265 A1